# EUROPÄISCHE PATENTSCHRIFT

(11) **EP 0 672 576 B1**
(45) Veröffentlichungstag und Bekanntmachung des Hinweises auf die Patenterteilung: **02.01.1997**
(21) Anmeldenummer: 95101755.7
(22) Anmeldetag: 09.02.1995
(51) Int. Cl.: B62D 25/14, B60K 37/00, B62D 25/08, B62D 65/00

(54) **Baueinheit für den Stirnwand- und Cockpitbereich eines Personenkraftwagens**
Assembly for the fire-wall and dashboard area of a motor vehicle
Module pour la partie comportant la cloison séparatrice et le poste de conduite d'un véhicule automobile

(30) Priorität: 17.03.1994 DE 4409081
(43) Veröffentlichungstag der Anmeldung: 20.09.1995
(73) Patentinhaber: MERCEDES-BENZ AG, 70327 Stuttgart (DE)
(72) Erfinder: Mühlhausen, Dipl.-Ing. Mark, D-70182 Stuttgart (DE)

(56) Entgegenhaltungen:
- EP-A- 0 119 131
- EP-A- 0 124 093
- EP-A- 0 370 342
- DE-A- 4 105 679

## Beschreibung

Die Erfindung betrifft eine in eine Fahrzeugkarosserie einmontierbare Baueinheit für den Stirnwand- und Cockpitbereich eines Personenkraftwagens, insbesondere eines zweisitzigen Kleinwagens nach dem Oberbegriff von Anspruch 1, wie sie beispielsweise aus der DE-PS 33 15 646 als bekannt hervorgeht.

Im Stand der Technik sind Baueinheiten vergleichbarer Funktion aus einer Vielzahl von Einzelkomponenten zusammengesetzt, was den Herstellungsprozeß der Baueinheiten verteuert.

Die EP 119 131 A1 zeigt nichttragende Fahrzeugteile wie Motorhauben, Heckklappen, Kofferraumdeckel oder ähnliche im Außenhautbereich eines Fahrzeuges liegende Komponenten ohne tragende Funktion, die als Kunststoff/Metall-Verbundkonstruktion ausgebildet sind, wobei die Blechkomponente ihrer Form nach einfach ausgebildet ist. Das Blech ist - außer am Rand - einseitig mit dem Kunststoff verbunden. Und zwar liegt das Blech aus optischen Gründen auf der Sichtseite der Hauben oder Klappen großflächig frei, weil das Blech nach einer Finish-Behandlung des Karosserieteiles - im Gegensatz zum Kunststoff - glatt und glänzend ist. Allgemein kann die technische Lehre dieser Schrift darin gesehen werden, nichttragende Fahrzeugteile des Außenbereiches zwar als Kunststoff/Metall-Verbundkonstruktion auszubilden, das Blech jedoch lediglich im Randbereich beidseitig in den Kunststoff einzubetten und es ansonsten lediglich rückseitig mit Kunststoff auszusteifen und die Sichtseite des Bleches aus optischen Gründen im wesentlichen freizuhalten. Im Prinzip handelt es sich bei der vorbekannten Heckklappe um ein Kunststoffteil, welches auch bezüglich seiner tragenden Struktur aus Kunststoff ausgebildet ist, wobei jedoch die sichtbaren Flächenelemente mit optisch ansprechenderem Blech ausgefüllt sind.

Aufgabe der Erfindung ist es, die gattungsgemäß zugrundegelegte Baueinheit dahingehend zu verbessern, daß deren Gewicht bei vergleichbarer Belastbarkeit und Funktion reduziert und daß deren Herstellung verbilligt wird.

Diese Aufgabe wird bei Zugrundelegung der gattungsgemäßen Baueinheit erfindungsgemäß durch die kennzeichnenden Merkmale von Anspruch 1 gelöst. Danach ist die Stirnwand als integrales Verbundbauteil aus gezogenem Blech und angespritztem Kunststoff gebildet. Bei dieser Bauweise wird ein großflächiges und relativ wenig filigran ausgeformtes Blechpreßteil mit im Blech integrierter Verstärkung für die höher belasteten Partien, z.B. die Pedalaufnahme und die Lenksäulenhalterung in ein Spritzgußwerkzeug eingelegt und mit einem thermoplastischen Kunststoff umspritzt. Dadurch können filigrane Strukturen des Verbundbauteiles für Versteifungen oder Aufnahmen für Zubauteile rasch, in einem einfachen und einheitlichen Arbeitsgang und somit kostengünstig angebracht werden. Zwar ist die hier zum Einsatz gelangende Spritzguß-Outsert-Technik an sich bekannt, jedoch beinhaltet sie in der vorliegenden Anwendung überraschende Vorteile.

Zweckmäßige Ausgestaltungen der Erfindung können den Unteransprüchen entnommen werden; im übrigen ist die Erfindung anhand eines in der Zeichnung dargestellten Ausführungsbeispieles nachfolgend noch erläutert; dabei zeigen:

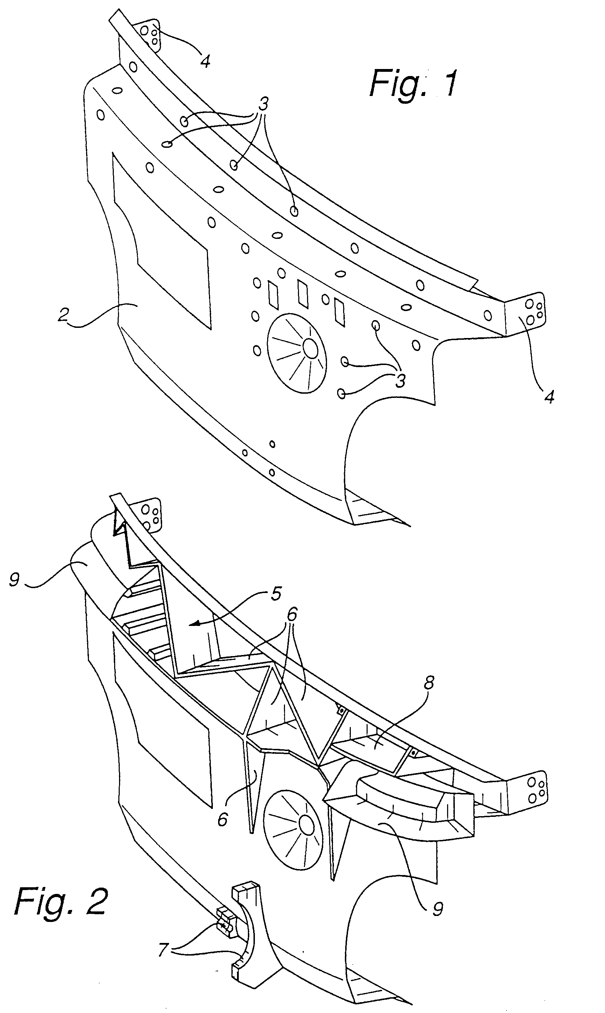

- Fig. 1: das Blechteil der Spritzwand in Einzeldarstellung, d.h. noch ohne angespritzten Kunststoff,
- Fig. 2: das Blechteil gemäß Figur 1 nach dem Anspritzen des Kunststoffes,

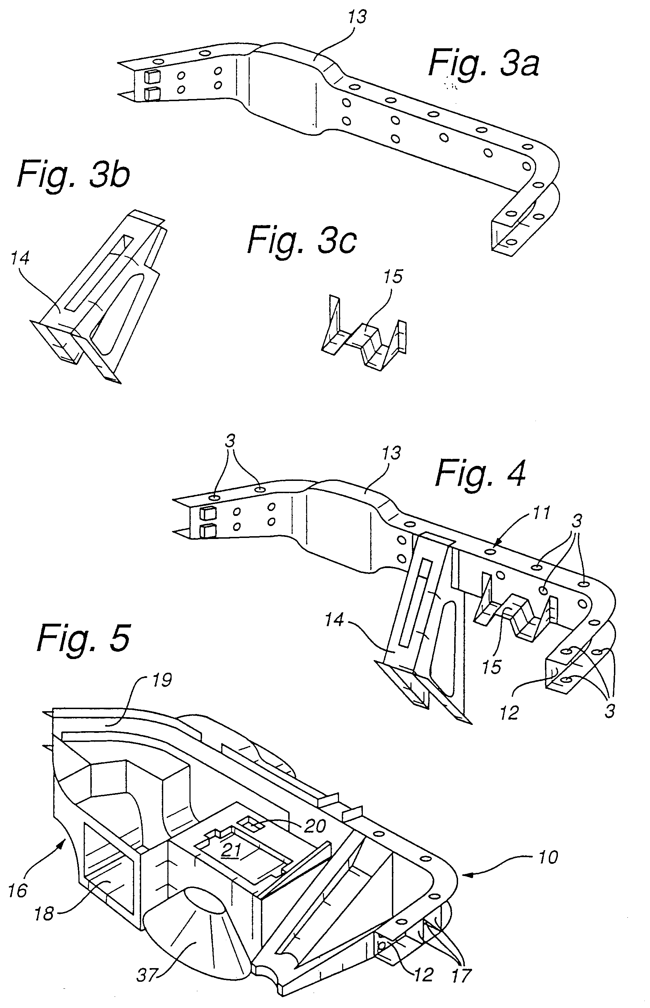

- Fig. 3a, 3b und 3c: die einzelnen Blechteile des Instrumententafelträgers,
- Fig. 4: den aus Blechteilen bestehenden Umfang des Instrumententafelträgers nach dem Zusammenschweißen der Einzelteile,
- Fig. 5: den Instrumententafelträger nach dem Anspritzen des Kunststoffes,

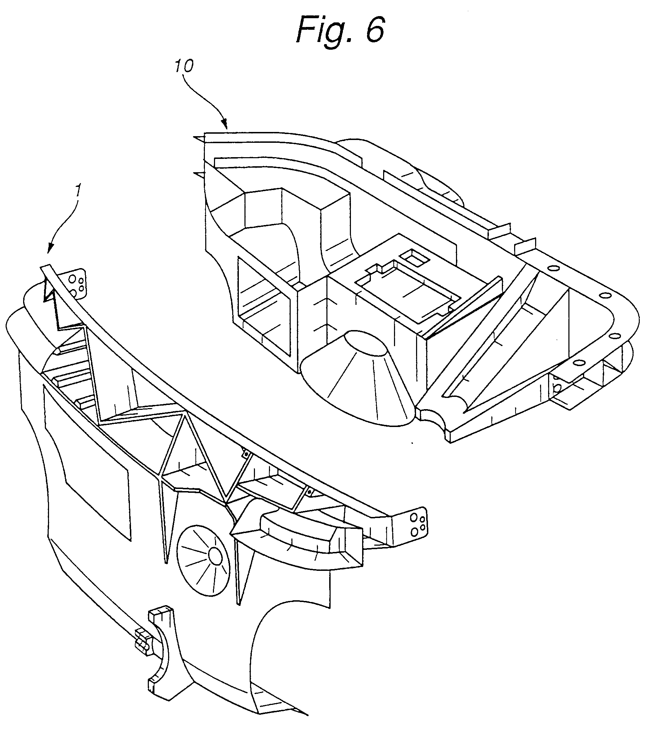

- Fig. 6: beide zur tragenden Substanz eines stirnwand- und Cockpitmoduls zusammenzusetzenden Verbundbauteile gemäß den Figuren 2 und 5 in voneinander abgerückter Position und

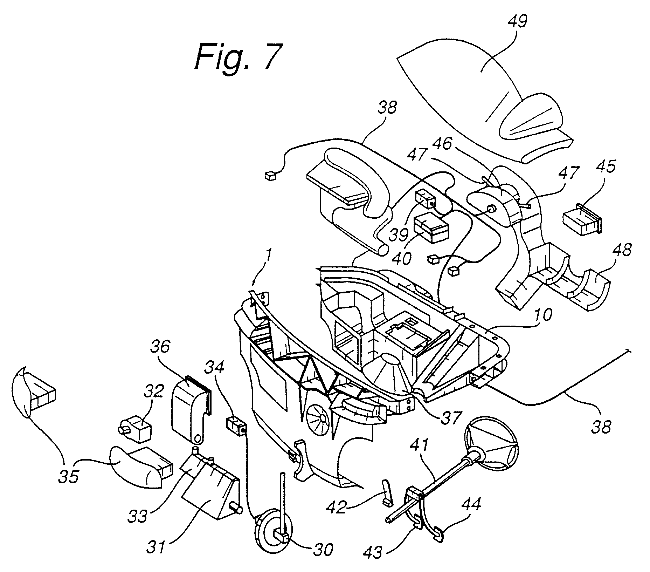

- Fig. 7: die beiden Teile nach Figur 6 zusätzlich mit den sonstigen Zubauteilen des Stirnwand- und Cockpitmoduls in Explosionsdarstellung.

Die Figuren zeigen in perspektivischer und auseinandergerückter Darstellung die Einzelteile einer beweglichen, in eine Fahrzeugkarosserie einmontierbare Baueinheit für den Stirnwand- und Cockpitbereich eines Personenkraftwagens, insbesondere eines zweisitzigen Kleinwagens. Zur Reduzierung der Herstellungskosten und des Gewichtes ist die Baueinheit in ihrer tragenden Substanz aus zwei Verbundteilen gebildet, die jeweils aus tiefgezogenem Blech und daran angespritztem Kunststoff bestehen, wobei das eine Verbundteil die Stirnwand 1 als vordere Abschlußwand des Insassenraumes und das andere Verbundteil den Instrumententafelträger 10 bildet.
Dabei ist der Blechanteil 2, 11 eines jeden Verbundteiles derart geformt, daß mit ihm dem großräumigen Kraftfluß bei der Aufnahme der Betriebsbelastung innerhalb des Verbundteiles und an den Anschlußstellen 4, 12 zur Karosserie hin Rechnung getragen ist und durch örtlich gezielte Anbringung von Bohrungen 3 Verankerungsstellen für den angespritzten Kunststoff 5, 16 zum formschlüssigen Verankern des Kunststoffes an dem Blechteil geschaffen sind. Der angespritzte Kunststoff ist derart geformt, daß mit ihm zum einen eine die Blechteile versteifende Verrippung und zum anderen formangepaßte Aufnahmen für die diversen Anbauteile gebildet werden. Das Blechteil 2 der Stirnwand 1 ist einteilig ausgebildet. Hingegen ist das Blechteil 11 des Instrumententafelträgers 10 aus drei vorgefertigten Einzelteilen aus Blech zusammengeschweißt; und zwar besteht es
▷ aus einem im Längsverlauf gewölbten, im Querschnitt U-förmigen Querträger 13,
▷ aus einer unterseitig etwa mittig daran angesetzten, schräg nach vorne weisenden Konsole 14 und
▷ aus einer im Bereich der Querposition des Fahrerplatzes unterseitig angebrachten Mantelrohraufnahme 15 für die Lenksäule 41.

Die Blechteile sind aus Stahlblech mit einer Blechstärke von etwa 0,8 bis 1,2 mm gefertigt. Der angespritzte Kunststoff ist ein glasfaserverstärktes Polyamid, vorzugsweise PA 6/GF 30; für ihn ist eine Wandstärke von 1 bis 3 mm vorgesehen.

Durch den an das Stirnwandblech 2 angespritzten Kunststoff 5 sind folgende Funktionsformen integriert:
▷ Verstärkunksrippen 6 für Träger unter der Windschutzscheibe,
▷ Aufnahmekonsole 8 für Scheibenwischermotor 32,
▷ Aufnahmen 9 für die Frontscheinwerfer 35,
▷ Befestigungskonsolen und sonstige Aufnahmen (7) u.a. für
   - Pedalanlage mit Fahrpedal 42, Bremspedal 43 und Kupplungspedal 44,
   - Bremskraftverstärker 30,
   - Scheibenwaschwasserbehälter 31 mit Spritzpumpe,
   - Kühlwasserausgleichsbehälter 33,
   - Bremsflüssigkeitsbehälter 34,
   - Service-Klappe.

Der an das Blechteil 11 des Instrumententafelträgers 10 angespritzte Kunststoff 16 integriert neben Verstärkungsrippen 17 unter anderem folgende Funktionsformen:
▷ Unterschale 18 des Heizungsgehäuses,
▷ in den Fußraum gerichtete Ausströmkanäle 37 für Heizluft,
▷ Kabelkanal 19 für den Kabelbaum 38 und Kabelhalter,
▷ Aufnahme für Beifahrer-Airbag, nämlich im Bereich der Erweiterung am Querträger 13,
▷ Aufnahme 20 für Airbag-Auslösegerät 39,
▷ Aufnahme 21 für Sicherungskasten 40.

Außerdem ist an den Instrumententafelträger die Wasserabscheidung 36 für die Heizluftansaugung angeflanscht und dementsprechend eine geeignete Anbaumöglichkeit integriert.

Der Instrumententafelträger 10 ist mit einem oberen (49) und einem unteren Verkleidungsteil 48 verkleidet, wobei in die Verkleidung noch wesentliche, andere Instrumente eingebaut sind, die ebenfalls zu einem Stirnwand- und Cockpitmodul gehören. Die Befestigungspunkte der Verkleidungsteile 48 und 49 an dem Instrumententafelträger 10 sind gleichfalls in dieses Verbundteil integriert. An erster Stelle ist im Zusammenhang mit den Instrumenten das sog. Kombi-Instrument 46 für die Fahr- und Betriebsüberwachung des Fahrzeuges durch den Fahrzeuglenker zu nennen. Bei dem gezeigten Ausführungsbeispiel ist dieses mit zwei spiegelbildlich angeordneten, nach Art von Lenkstockschaltern etwa radial zur Lenksäule 41 ausgerichteten, jedoch feststehend an der Instrumententafel im Bereich der Lenksäule angeordneten Funktionshebeln 47 für die Blinker- und Lichthupenbetätigung und für die Wischerbetätigung versehen. Ferner ist in den Verkleidungsteilen u.a. auch eine Halterung für ein Radio 45 vorgesehen.

## Patentansprüche

1. In eine Fahrzeugkarosserie einmontierbare Baueinheit für den Stirnwand- und Cockpitbereich eines Personenkraftwagens, insbesondere eines zweisitzigen Kleinwagens,
**dadurch gekennzeichnet**,
▷ daß die Baueinheit in seiner tragenden Substanz aus zwei Verbundteilen gebildet ist, die jeweils aus tiefgezogenem Blech und daran angespritztem Kunststoff bestehen, wobei das eine Verbundteil die Stirnwand (1) als vordere, bezüglich ihres Blechkernes (2) einteilig ausgebildete Abschlußwand des Insassenraumes und das andere Verbundteil den Instrumententafelträger (10) bildet, welches bezüglich seines Blechkernes (11) aus einem Querträger (13) und mehreren vorgefertigten daran angeschweißten Konsolen (14, 15) zusammengesetzt ist,
▷ wobei der Blechanteil (2, 11) eines jeden Verbundteiles (1, 10) derart geformt ist, daß mit ihm dem großräumigen Kraftfluß bei der Aufnahme der Betriebsbelastung innerhalb des Verbundteiles (1, 10) und an den Anschlußstellen (4, 12) zur Karosserie hin Rechnung getragen ist und durch örtlich gezielte Anbringung von Bohrungen (3), Durchbrüchen und/oder ausgestellten Zungen Verankerungsstellen für den angespritzten Kunststoff (5, 16) zum formschlüssigen Verankern des Kunststoffes an dem Blechteil (2, 11) geschaffen sind und
▷ wobei der angespritzte Kunststoff (5, 16) derart geformt ist, daß mit ihm zum einen eine die Blechteile (2, 11) versteifende Verrippung (6, 12) und zum anderen formangepaßte Aufnahmen (7, 8, 9, 19, 20, 21) für die diversen Anbauteile (32, 35, 38, 39, 40) gebildet werden.

2. Baueinheit nach Anspruch 1,
**dadurch gekennzeichnet**,
daß das Blechteil (11) des Instrumententafelträgers (10) aus drei vorgefertigten Einzelteilen aus Blech zusammengeschweißt ist, nämlich
▷ aus dem im Längsverlauf gewölbten, im Querschnitt U-förmigen Querträger (13),
▷ aus einer unterseitig etwa mittig daran angesetzten, schräg nach vorne weisenden Konsole (14) und
▷ aus einer im Bereich der Querposition des Fahrerplatzes unterseitig angebrachten Mantelrohraufnahme (15) für die Lenksäule (41).

3. Baueinheit nach Anspruch 1,
**dadurch gekennzeichnet**,
daß die Blechteile (2, 11) aus Stahlblech mit einer Blechstärke von etwa 0,8 bis 1,2 mm gefertigt sind.

4. Baueinheit nach Anspruch 1,
**dadurch gekennzeichnet**,
daß der angespritzte Kunststoff (5, 16) ein glasfaserverstärktes Polyamid, vorzugsweise PA 6/GF 30 ist und in einer Wandstärke von 1 bis 3 mm geformt ist.

5. Baueinheit nach Anspruch 1,
**dadurch gekennzeichnet**,
daß durch den an das Stirnwandblech (2) angespritzten Kunststoff (5) folgende Funktionsformen integriert sind:
▷ Verstärkunksrippen (6) für Träger unter der Windschutzscheibe,
▷ Aufnahmekonsole (8) für Scheibenwischermotor (32),
▷ Aufnahmen (9) für die Frontscheinwerfer (35),
▷ Befestigungskonsolen für
- Pedalanlage (Pedale 42, 43, 44),
- Bremskraftverstärker (30),
- Scheibenwaschanlage (31),
- Kühlwasserausgleichsbehälter (33),
- Bremsflüssigkeitsbehälter (34),
- Service-Klappe.

6. Baueinheit nach Anspruch 1,
**dadurch gekennzeichnet**,
daß durch den an das Blechteil (11) des Instrumententafelträgers (10) angespritzten Kunststoff (16) unter anderem folgende Funktionsformen integriert sind:
▷ Unterschale (18) des Heizungsgehäuses,
▷ in den Fußraum gerichtete Ausströmkanäle (37) für Heizluft,
▷ Kabelkanal (19) und Kabelhalter,
▷ Aufnahme für Beifahrer-Airbag,
▷ Aufnahme (20) für Airbag-Auslösegerät (39),
▷ Aufnahme (21) für Sicherungskasten (40).

## Claims

1. Constructional unit, capable of being built into a vehicle body, for the region of the scuttle and of the cockpit of a passenger car, particularly of a small two-seater, characterized in that
* the constructional unit is formed in its supporting substance from two composite parts which each consist of deep-drawn sheet metal and of plastic injection-moulded thereon, one composite part forming the scuttle (1) as the front end wall, made in one part as regards its sheet-metal core (2), of the passenger space and the other composite part forming the dashboard carrier (10) which, as regards its sheet-metal core (11), is composed of a crossmember (13) and a plurality of prefabricated brackets (14, 15) welded thereon,
* the sheet-metal component (2, 11) of each composite part (1, 10) being shaped in such a way that it allows for the extensive forceflux during the absorption of the operating load within the composite part (1, 10) and at the connection points (4, 12) with the body, and, by making bores (3) perforations and/or set-out tongues at specific locations, anchoring points for the plastic (5, 16) injection-moulded on are provided for the positive anchoring of the plastic on the sheet-metal part (2, 11), and
* the plastic (5,16) injection-moulded on being shaped in such a way that it forms, on the one hand, a ribbing (6, 12) stiffening the sheet-metal parts (2, 11) and, on the other hand, suitably shaped receptacles (7, 8, 9, 19, 20, 21) for the various add-on parts (32, 35, 38, 39, 40).

2. Constructional unit according to Claim 1, characterized in that the sheet-metal part (11) of the dashboard carrier (10) is welded together from three prefabricated individual parts made of sheet metal, namely
* from the crossmember (13) of U-shaped cross-section which is curved longitudinally,
* from a bracket (14) attached approximately centrally thereto on the underside and pointing obliquely forwards, and
* from a steering-column jacket receptacle (15) mounted on the underside in the region of the transverse position of the driver's seat and intended for the steering column (41).

3. Constructional unit according to Claim 1, characterized in that the sheet-metal parts (2, 11) are produced from sheet steel with a sheet thickness of approximately 0.8 to 1.2 mm.

4. Constructional unit according to Claim 1, characterized in that the plastic (5, 16) injection-moulded on is a glass-fibre-reinforced polyamide, preferably PA 6/GF 30, and is shaped in a wall thickness of 1 to 3 mm.

5. Constructional unit according to Claim 1, characterized in that the following functional shapes are integrated by means of the plastic (5) injection-moulded onto the scuttle board (2):
* reinforcing ribs (6) for carriers under the windscreen,
* receiving bracket (8) for the windscreen-wiper motor (32),
* receptacles (9) for the front headlamps (35),
* fastening brackets for
- pedal assembly (pedals 42, 43, 44),
- brake booster (30),
- windscreen-washing system (31),
- cooling-water compensator reservoir (33),
- brake-fluid reservoir (34),
- service flap.

6. Constructional unit according to Claim 1, characterized in that inter alia the following functional shapes are integrated by means of the plastic (16) injection-moulded onto the sheet-metal part (11) of the dashboard carrier (10):
* bottom shell (18) of the heating housing,
* heating-air outflow ducts (37) directed into the foot space,
* cable conduit (19) and cable holder,
* receptacle for the front-seat passenger's airbag,
* receptacle (20) for the airbag-release device (39),
* receptacle (21) for the fuse box (40).

## Revendications

1. Module pouvant être monté dans une carrosserie de véhicule pour constituer la zone du tablier et du poste de conduite d'un véhicule automobile, notamment d'un petit véhicule à deux places,
caractérisé
• en ce que le module, dans sa structure portante, est constitué de deux parties composites qui se composent, respectivement, de tôle emboutie en profondeur et de matière plastique projetée dessus, où l'une des parties composites constitue le tablier (1) servant de panneau de fermeture avant de l'habitacle, panneau réalisé, concernant son noyau en tôle (2), de façon monobloc, et l'autre partie composite constitue le support (10) du tableau de bord, cette autre partie composite étant composée, concernant son noyau en tôle (11), d'une traverse (13) et de plusieurs consoles pré-fabriquées (14, 15) soudées sur la traverse,
• où la partie tôlée (2, 11) de chaque partie composite (1, 10) est formée en tenant compte des forces importantes qui sont supportées par elle, par la reprise de la sollicitation de fonctionnement, à l'intérieur de la partie composite (1, 10) et au niveau des raccords (4, 12) avec la carrosserie, et en aménageant par la réalisation, aux endroits appropriés, de perçages (3), de passages et/ou de languettes exposées des points d'ancrage pour la matière plastique projetée (5, 16) afin de constituer l'ancrage, par sûreté de forme, de la matière plastique à la partie tôlée (2, 11), et
• où la matière plastique projetée (5, 16) est formée de façon telle que, avec elle, on forme, d'une part, un nervurage (6, 12) raidissant les parties tôlées (2, 11) et, d'autre part, on forme des logements de formes adaptées (7, 8, 9, 19, 20, 21) pour les différentes pièces à rapporter (32, 35, 38, 39, 40).

2. Module selon la revendication 1, caractérisé en ce que la partie tôlée (11) du support (10) du tableau de bord se compose de trois pièces en tôle pré-fabriquées, soudées ensemble, à savoir
• une traverse (13) bombée dans le sens longitudinal et ayant une section de forme en U,
• une console (14), tournée obliquement vers l'avant, se raccordant à la traverse en dessous de celle-ci, à peu près au milieu de la traverse, et
• un logement (15) du tube de protection pour la colonne de direction (41), rapporté en dessous, dans la zone de la position transversale du siège du conducteur.

3. Module selon la revendication 1, caractérisé en ce que les parties tôlées (2, 11) sont fabriquées en tôle d'acier ayant une épaisseur de tôle comprise entre 0,8 mm et 1,2 mm environ.

4. Module selon la revendication 1, caractérisé en ce que la matière plastique (5, 16) projetée est un polyamide renforcé de fibres de verre, de préférence un polyamide du type PA 6/GF 30, et suivant une épaisseur de paroi comprise entre 1 mm et 3 mm.

5. Module selon la revendication 1, caractérisé en ce que les formes fonctionnelles suivantes sont intégrées grâce à la matière plastique (5) projetée sur la tôle (2) du tablier :
• nervures de renfort (6) pour le support sous le pare-brise,
• console de réception (8) pour le moteur (32) d'essuie-glaces,
• logements (9) pour les optiques avant (35),
• consoles de fixation pour
• le pédalier (pédales 42, 43, 44)
• le dispositif de servofrein (30),
• le système d'essuie-glaces (31),
• le vase d'expansion d'eau de refroidissement (33),
• le réservoir du liquide de frein (34),
• la trappe de service.

6. Module selon la revendication 1, caractérisé ce que les formes fonctionnelles suivantes, parmi d'autres, sont intégrées grâce à la matière plastique (16) projetée sur la partie tôlée (11) du support (10) du tableau de bord :
• coque inférieure (18) du système de chauffage,
• ouïes de ventilation (37) d'air chaud dirigées vers le bas de l'habitacle,
• chemin de câbles (19) et porte-câbles,
• logement pour coussin gonflable pour le passager,
• logement (20) pour dispositif de déclenchement (39), du coussin gonflable,
• logement (21) pour coffret à fusibles (40).
